# EUROPÄISCHE PATENTSCHRIFT

(11) **EP 2 773 517 B1**
(45) Veröffentlichungstag und Bekanntmachung des Hinweises auf die Patenterteilung: **16.05.2018**
(21) Anmeldenummer: 12756755.0
(22) Anmeldetag: 13.09.2012
(51) Int. Cl.: B60C 9/20

(54) **FAHRZEUGLUFTREIFEN**
PNEUMATIC VEHICLE TYRE
PNEUMATIQUE DE VÉHICULE

(30) Priorität: 01.11.2011 DE 102011054975
(43) Veröffentlichungstag der Anmeldung: 10.09.2014
(73) Patentinhaber: Continental Reifen Deutschland GmbH, 30165 Hannover (DE)
(72) Erfinder: HERTA, Katie, 30169 Hannover (DE); BARTKE, Jörg, 30173 Hannover (DE); ZHENG, Dong, 30419 Hannover (DE)
(74) Vertreter: Finger, Karsten
(86) Internationale Anmeldenummer: PCT/EP2012/067901
(87) Internationale Veröffentlichungsnummer: WO 2013/064296

(56) Entgegenhaltungen:
- DE-A1-102005 057 823
- JP-A- 2000 177 314

## Beschreibung

Die Erfindung betrifft einen Fahrzeugluftreifen in Radialbauart für Schwerlastfahrzeuge mit einem vierlagigen Gürtel, wobei jede Gürtellage als Festigkeitsträger Stahlcorde enthält, die in jeder Gürtellage jeweils parallel zueinander verlaufen, wobei die Neigung der Stahlcorde zur Umfangsrichtung beginnend bei der ersten, radial innersten Gürtellage, einer bestimmten Abfolge von rechts- und/oder linkssteigend folgt und wobei die Winkel, welche die Stahlcorde in der zweiten und dritten Gürtellage mit der Umfangsrichtung einschließen, jeweils etwa gleich sind, wobei die Winkel, welche die Stahlcorde in der ersten und vierten Gürtellage mit der Umfangsrichtung einschließen, ebenfalls jeweils etwa gleich sind.

Ein derartiger Fahrzeugluftreifen ist aus der DE 2005 057 823 A1 sowie aus der JP 2000 177314 A bekannt.

Es ist weiterhin bekannt, dass die Auslegung der Gürtelkonstruktion maßgeblichen Einfluss auf das Abriebbild von nicht angetriebenen LKW-Reifen nimmt, insbesondere wenn diese im Fernverkehr mit einem sehr großen Anteil an Geradeauslauf eingesetzt werden. Üblich ist beispielsweise die Verwendung eines sogenannten Rautengürtels mit typischerweise vier Lagen, deren Stahlcorde mit der Umfangsrichtung des Reifens einen Winkel von 16° bis 20° einschließen und die Lagen derart aufgelegt sind, dass sich die Stahlcorde abwechselnd kreuzen. Ein weiterer typischer Gürtel für LKW-Reifen ist der sogenannte Dreiecksgürtel mit vier Lagen, wobei die Stahlcorde in der ersten, radial innersten Gürtellage einen Winkel von 50° bis 65° mit der Umfangsrichtung einschließen. Es ist ferner üblich, dass die Orientierung der Stahlcorde in den einzelnen Gürtellagen zur Umfangsrichtung mit R für eine Neigung nach Rechts und mit L für eine Neigung nach Links bezeichnet wird. Eine typische Abfolge ist RRLL mit einem Winkel von beispielsweise 50° in der ersten (radial innersten) Gürtellage und einem Winkel von jeweils 18° in den anderen Gürtellagen.

Aus der DE 10 2006 020 933 A1 ist bekannt, dass die Festigkeitsträger der ersten, radial innersten Gürtellage einen Winkel von 50° bis 65° mit der Umfangsrichtung einschließen. Die zweite und dritte Gürtellage weist Festigkeitsträger auf, die jeweils einen gleichen Winkel von 16° bis 20° mit der Umfangsrichtung einschließen. Die vierte Gürtellage weist einen sehr großen Winkel mit der Umfangsrichtung auf und beträgt zwischen 50° und 90°, vorzugsweise zwischen 70° und 90°. Die Abfolge der Anordnung der Festigkeitsträger von der ersten zur vierten Gürtellage ist RRLR. Durch diese spezielle Gürtelausrichtung ist erreicht, dass der Schulterabrieb vermindert ist sowie dass das Entstehen von Freilaufrillen deutlich verzögert ist.

Der Erfindung liegt die Aufgabe zugrunde, einen alternativen LKW-Reifen der eingangs genannten Art mit einem vierlagigen Gürtel derart auszuführen, dass der auftretende überproportionale Schulterabrieb vermindert wird sowie das Entstehen von Freilaufrillen deutlich verzögert ist. Zudem sollen die Plungerwerte steigen.

Gelöst wird die gestellte Aufgabe erfindungsgemäß dadurch, dass zwischen der dritten und der vierten Gürtellage eine zusätzliche Gummilage angeordnet ist, welche vorzugsweise eine Dicke zwischen 1,5 mm und 3,5 mm aufweist.

Es ist LKW-Reifen mit einem vierlagigen Gürtel geschaffen, dessen Festigkeitsträger der 1. und 4. Gürtellage sowie dessen Festigkeitsträger der 2. und 3. Gürtellage jeweils etwa gleiche Winkel in Bezug auf die Umfangsrichtung aufweisen. Dabei bedeutet "etwa gleiche Winkel", dass herstellungsbedingt Abweichungen von 5° auftreten können. Es hat sich gezeigt, dass LKW-Reifen mit einem vorgenannten Gürtel ein deutlich verbessertes Abriebbild aufweisen. Insbesondere ist bei erfindungsgemäßen Reifen die Ausprägung von Abrieberscheinung in den Schulterbereichen deutlich geringer und die Ausbildung von Freilaufrillen tritt wesentlich später auf. Ursache der erzielbaren Verringerung des Schulterabriebes und der eintretenden Verzögerung des Entstehens von Freilaufrillen dürfte die wesentlich geringere Deformation des Gürtels und so auch des Laufstreifens in Umfangsrichtung sein. Die geringere Deformation ist ebenfalls über die gesamte Gürtelbreite zu beobachten. Insbesondere zeigt sich diese geringere Deformation des Gürtels im Schulterbereich. Dieses liegt vermutlich daran, dass bei der erfindungsgemäßen Gürtelkonstruktion die bei der Bombage während der Reifenherstellung erforderliche Dehnung primär aufgrund einer Veränderung der Cordbeabstandung zueinander stattfindet und nicht, wie bei Reifen des Standes der Technik, über Cordwinkeländerungen in Bezug auf die Umfangsrichtung, welches im fertigen Reifen die Steifigkeit und somit den Laufstreifenabrieb nachteilig beeinflusst. Zudem hat sich gezeigt, dass sich mit der Anordnung der Gummilage die Kordbeabstandung der vierten Gürtellage verringert sowie die Plungerwerte vorteilhaft steigen.

Vorteilhaft ist es, wenn der Winkel, den die Stahlcorde in der zweiten und dritten Gürtellage mit der Umfangsrichtung einschließen, zwischen 10° und 30°, vorzugsweise zwischen 18° und 24°beträgt.

Vorteilhaft ist es, wenn der Winkel, den die Stahlcorde in der ersten und vierten Gürtellage mit der Umfangsrichtung einschließen, zwischen 40° und 55°, vorzugsweise zwischen beträgt. Der Abrieb und die Haltbarkeit des Reifens ist verbessert, zudem gehen die Plungerwerte vorteilhaft hoch.

Der Fahrzeugluftreifen kann einen Gürtel aufweisen, bei dem die Neigung der Stahlcorde zur Umfangsrichtung beginnend bei der ersten, radial innersten Gürtellage, der Abfolge RRLL (rechtssteigend, rechtssteigend, linkssteigend, linkssteigend) folgt. Mit der vorgenannten Neigungsabfolge werden beste Vorteile erzielt. Es hat sich gezeigt, dass insbesondere in Bezug auf den Abrieb Vorteile erzielt werden.

Alternativ kann der Fahrzeugluftreifen einen Gürtel aufweisen, bei dem die Neigung der Stahlcorde zur Umfangsrichtung, beginnend bei der ersten, radial innersten Gürtellage, der Abfolge RRLR (rechtssteigend, rechtssteigend, linkssteigend, rechtssteigend) folgt.

Wiederum alternativ kann der Fahrzeugluftreifen einen Gürtel aufweisen, bei dem die Neigung der Stahlcorde zur Umfangsrichtung, beginnend bei der ersten, radial innersten Gürtellage, der Abfolge RLRL (rechtssteigend, linkssteigend, rechtssteigend, linkssteigend) folgt.

Wiederum alternativ kann der Fahrzeugluftreifen einen Gürtel aufweisen, bei dem die Neigung der Stahlcorde zur Umfangsrichtung, beginnend bei der ersten, radial innersten Gürtellage, der Abfolge LRLR (linkssteigend, rechtssteigend, linkssteigend, rechtssteigend) folgt.

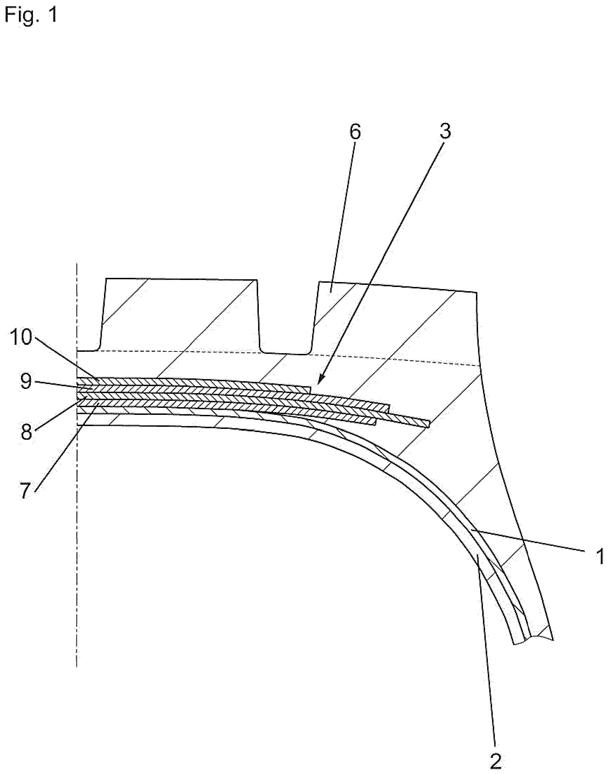

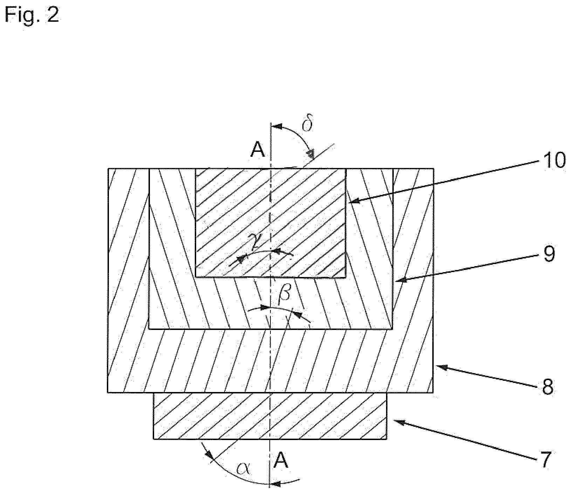

Weitere Merkmale, Vorteile und Einzelheiten der Erfindung werden nun anhand der Zeichnungen, die schematisch ein Ausführungsbeispiel darstellen, näher beschrieben. Dabei zeigen die
Fig.1 einen Teilquerschnitt durch die eine Hälfte eine Fahrzeugluftreifens im Bereich des Gürtels und des Laufstreifens und Fig. 2 eine Draufsicht auf eine Ausführungsvariante der Gürtellagen.

Fig. 1 zeigt einen Querschnitt durch den Laufstreifen und den Gürtelbereich eines Fahrzeugluftreifens für Lastkraftwagen in einer üblichen Standardkonstruktion mit einer Karkasse 1 mit Stahlcorden als Festigkeitsträgern, einer luftdichten Innenschicht 2, einem mehrlagigen Gürtel 3, und einem profilierten Laufstreifen 6.

Der Gürtel 3 weist vier Gürtellagen 7, 8, 9 und 10 auf, wobei die vierte, radial äußerste Gürtellage 10 die geringste Breite von allen Lagen aufweist und die sogenannte Schutzlage bildet. Die erste Gürtellage 7 ist die sogenannte Sperrlage, die zweite Gürtellage 8 und die dritte Gürtellage 9 sind die sogenannten Arbeitslagen. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Die vierte Gürtellage 10 kann ferner gleich breit wie die dritte Gürtellage 9 ausgeführt sein. Sämtliche Gürtellagen 7, 8, 9, 10 bestehen aus in eine Gummimischung, der Gürtelgummierung, eingebetteten Festigkeitsträgern aus Stahlcord, beispielsweise Stahlcord der Konstruktion 3 x 0,2 mm + 6 x 0,35 mm. Selbstverständlich können in den Gürtellagen auch Stahlcorde anderer Konstruktionen eingesetzt werden.

Wie Fig. 2 zeigt verlaufen die Stahlcorde in jeder der Lagen 7, 8, 9 und 10 jeweils parallel zueinander und schließen mit der durch die Linie A-A angedeuteten Umfangsrichtung des Reifens Winkel α, β, γ und δ ein. Die Neigung der Stahlcorde zur Umfangsrichtung in den einzelnen Gürtellagen 7, 8, 9, 10, beginnend bei der radial innersten Gürtellage 7, ist derart, dass die Abfolge RRLR (rechtssteigend, rechtssteigend, linkssteigend, rechtssteigend) vorliegt. Bei einem erfindungsgemäß ausgelegten vierlagigen Gürtel sind daher die Stahlcorde in der ersten, der zweiten und der vierten Gürtellage 7, 8 und 10 bezüglich der Umfangsrichtung A-A nach rechts geneigt. Der Winkel α und der Winkel δ, den die Stahlcorde der ersten Gürtellage 7 und der vierten Gürtellage 10 mit der Umfangsrichtung A-A einschließen, ist in etwa gleich und beträgt zwischen 50° oder in einer alternativen Ausführung 46°. Der Winkel β und der Winkel γ, den die Stahlcorde in der zweiten Gürtellage 8 und der dritten Gürtellage 9 mit der Umfangsrichtung einschließen, ist ebenfalls in etwa gleich und beträgt zwischen 10° und 30°.

Für erfindungsgemäß ausgeführte Reifen können die Winkel α, β, γ und δ in den einzelnen Gürtellagen 7, 8, 9 und 10 beispielsweise folgende Größen aufweisen:
α = 50°, β = 18°, γ = 18°, δ = 50° oder
α = 50°, β = 24°, γ = 24°, δ = 50° oder
α = 46°, β = 18°, γ = 18°, δ = 46°.

LKW-Radialreifen mit erfindungsgemäß gewinkelten Stahlcorden in den Gürtellagen weisen, insbesondere wenn sie auf der Vorderachse von Anhängern oder auf der Antriebsachse von wide base-Reifen oder low aspect ratio-Reifen eingesetzt werden, ein wesentlich verbessertes Abriebsbild in den Schulterbereichen auf, und es treten Freilaufrillen gegenüber Reifen mit einer herkömmlichen Winkelung der Stahlcorde in den Gürtellagen wesentlich später, nach einer größeren Laufleistung, auf.

"Low aspect ratio-Reifen" meint Reifen mit einem aspect ratio < 50%.

### Bezugszeichenliste

### (Teil der Beschreibung)

- 1: Karkasse
- 2: Innenschicht
- 3: Gürtel
- 6: Laufstreifen
- 7: Gürtellage
- 8: Gürtellage
- 9: Gürtellage
- 10: Gürtellage

## Patentansprüche

1. Fahrzeugluftreifen in Radialbauart für Schwerlastfahrzeuge mit einem vierlagigen Gürtel (3), wobei jede Gürtellage (7, 8, 9, 10) als Festigkeitsträger Stahlcorde enthält, die in jeder Gürtellage (7, 8, 9, 10) jeweils parallel zueinander verlaufen, wobei die Neigung der Stahlcorde zur Umfangsrichtung (A-A) beginnend bei der ersten, radial innersten Gürtellage (7), einer bestimmten Abfolge von rechts (R)- und/oder linkssteigend (L) folgt und wobei die Winkel (β, γ), welche die Stahlcorde in der zweiten und dritten Gürtellage (8, 9) mit der Umfangsrichtung (A-A) einschließen, jeweils etwa gleich sind, wobei die Winkel (α, δ), welche die Stahlcorde in der ersten und vierten Gürtellage (7, 10) mit der Umfangsrichtung (A-A) einschließen, ebenfalls jeweils etwa gleich sind, **dadurch gekennzeichnet, dass** zwischen der dritten und der vierten Gürtellage eine zusätzliche Gummilage angeordnet ist, welche vorzugsweise eine Dicke zwischen 1,5 mm und 3,5 mm aufweist.

2. Fahrzeugluftreifen nach Anspruch 1, **dadurch gekennzeichnet, dass** der Winkel (β, γ), den die Stahlcorde in der zweiten und dritten Gürtellage (8, 9) mit der Umfangsrichtung (A-A) einschließen, zwischen 10° und 30°, vorzugsweise zwischen 18° und 24° beträgt.

3. Fahrzeugluftreifen nach Anspruch 1 oder 2, **dadurch gekennzeichnet, dass** der Winkel (α, δ), den die Stahlcorde in der ersten und vierten Gürtellage (7, 10) mit der Umfangsrichtung (A-A) einschließen, zwischen 40° und 55°, vorzugsweise zwischen 40° und 46° beträgt.

4. Fahrzeugluftreifen nach einem oder mehreren der vorangehenden Ansprüche, **dadurch gekennzeichnet, dass** die Neigung der Stahlcorde zur Umfangsrichtung (A-A) beginnend bei der ersten, radial innersten Gürtellage (7), der Abfolge RRLL folgt.

5. Fahrzeugluftreifen nach einem oder mehreren der vorangehenden Ansprüche, **dadurch gekennzeichnet, dass** die Neigung der Stahlcorde zur Umfangsrichtung (A-A) beginnend bei der ersten, radial innersten Gürtellage (7), der Abfolge RRLR folgt.

6. Fahrzeugluftreifen nach einem oder mehreren der vorangehenden Ansprüche, **dadurch gekennzeichnet, dass** die Neigung der Stahlcorde zur Umfangsrichtung (A-A) beginnend bei der ersten, radial innersten Gürtellage (7), der Abfolge RLRL folgt.

7. Fahrzeugluftreifen nach einem oder mehreren der vorangehenden Ansprüche, **dadurch gekennzeichnet, dass** die Neigung der Stahlcorde zur Umfangsrichtung (A-A) beginnend bei der ersten, radial innersten Gürtellage (7), der Abfolge LRLR folgt.

## Claims

1. Pneumatic vehicle tyre of a radial type of construction for heavy trucks, with a four-ply breaker belt (3), wherein each belt ply (7, 8, 9, 10) contains steel cords as reinforcing elements, which respectively run parallel to one another in each belt ply (7, 8, 9, 10), the slope of the steel cords relative to the circumferential direction (A-A) following a certain sequence in respect of rightward (R) and/or leftward (L) slope, starting with the first, radially innermost belt ply (7), and wherein the angles (β, γ) that the steel cords in the second and third belt plies (8, 9) form with the circumferential direction (A-A) are approximately the same in each case, wherein the angles (α, δ) that the steel cords in the first and fourth belt plies (7, 10) form with the circumferential direction (A-A) are likewise approximately the same in each case, **characterized in that** an additional rubber ply, which preferably has a thickness of between 1.5 mm and 3.5 mm, is arranged between the third and fourth belt plies.

2. Pneumatic vehicle tyre according to Claim 1, **characterized in that** the angle (β, γ) that the steel cords in the second and third belt plies (8, 9) form with the circumferential direction (A-A) is between 10° and 30°, preferably between 18° and 24°.

3. Pneumatic vehicle tyre according to Claim 1 or 2, **characterized in that** the angle (α, δ) that the steel cords in the first and fourth belt plies (7, 10) form with the circumferential direction (A-A) is between 40° and 55°, preferably between 40° and 46°.

4. Pneumatic vehicle tyre according to one or more of the preceding claims, **characterized in that** the slope of the steel cords relative to the circumferential direction (A-A) follows the sequence RRLL, starting with the first, radially innermost belt ply (7).

5. Pneumatic vehicle tyre according to one or more of the preceding claims, **characterized in that** the slope of the steel cords relative to the circumferential direction (A-A) follows the sequence RRLR, starting with the first, radially innermost belt ply (7).

6. Pneumatic vehicle tyre according to one or more of the preceding claims, **characterized in that** the slope of the steel cords relative to the circumferential direction (A-A) follows the sequence RLRL, starting with the first, radially innermost belt ply (7).

7. Pneumatic vehicle tyre according to one or more of the preceding claims, **characterized in that** the slope of the steel cords relative to the circumferential direction (A-A) follows the sequence LRLR, starting with the first, radially innermost belt ply (7).

## Revendications

1. Pneumatique de véhicule de type radial pour des véhicules poids lourds avec une nappe d'armature (3) à quatre couches, dans lequel chaque couche de nappe d'armature (7, 8, 9, 10) contient comme éléments de résistance des câbles d'acier, qui courent respectivement parallèlement les uns aux autres dans chaque couche de nappe d'armature (7, 8, 9, 10), dans lequel l'obliquité des câbles d'acier par rapport à la direction périphérique (A-A) en commençant par la première couche (7), radialement le plus intérieure, de la nappe d'armature suit une succession déterminée avec pente à droite (R) et/ou à gauche (L) et dans lequel les angles (β, γ), que les câbles d'acier forment avec la direction périphérique (A-A) dans la deuxième et la troisième couches (8, 9) de la nappe d'armature sont chaque fois sensiblement égaux, dans lequel les angles (α, δ), que les câbles d'acier forment avec la direction périphérique (A-A) dans la première et la quatrième couches (7, 10) de la nappe d'armature, sont également respectivement sensiblement égaux, **caractérisé en ce qu'**une couche de gomme supplémentaire est disposée entre la troisième et la quatrième couches de la nappe d'armature, et présente de préférence une épaisseur comprise entre 1,5 mm et 3,5 mm.

2. Pneumatique de véhicule selon la revendication 1, **caractérisé en ce que** l'angle (β, γ), que les câbles d'acier forment avec la direction périphérique (A-A) dans la deuxième et la troisième couches (8, 9) de la nappe d'armature, vaut entre 10° et 30°, de préférence entre 18° et 24°.

3. Pneumatique de véhicule selon la revendication 1 ou 2, **caractérisé en ce que** l'angle (α, δ), que les câbles d'acier forment avec la direction périphérique (A-A) dans la première et la quatrième couches (7, 10) de la nappe d'armature, vaut entre 40° et 55°, de préférence entre 40° et 46°.

4. Pneumatique de véhicule selon une ou plusieurs des revendications précédentes, **caractérisé en ce que** l'obliquité des câbles d'acier par rapport à la direction périphérique (A-A) suit la succession RRLL en commençant par la première couche (7), radialement le plus intérieure, de la nappe d'armature.

5. Pneumatique de véhicule selon une ou plusieurs des revendications précédentes, **caractérisé en ce que** l'obliquité des câbles d'acier par rapport à la direction périphérique (A-A) suit la succession RRLR en commençant par la première couche (7), radialement le plus intérieure, de la nappe d'armature.

6. Pneumatique de véhicule selon une ou plusieurs des revendications précédentes, **caractérisé en ce que** l'obliquité des câbles d'acier par rapport à la direction périphérique (A-A) suit la succession RLRL, en commençant par la première couche (7), radialement le plus intérieure, de la nappe d'armature.

7. Pneumatique de véhicule selon une ou plusieurs des revendications précédentes, **caractérisé en ce que** l'obliquité des câbles d'acier par rapport à la direction périphérique (A-A) suit la succession LRLR en commençant par la première couche (7), radialement le plus intérieure, de la nappe d'armature.
